# EUROPEAN PATENT APPLICATION

(11) **EP 0 878 683 A2**
(43) Date of publication of application: **18.11.1998**
(21) Application number: 98108518.6
(22) Date of filing: 11.05.1998
(51) Int. Cl.: F28F 9/26, F24H 9/12, F16L 13/14

(54) **Method for coupling two components to form a comfort appliance**

(30) Priority: 12.05.1997 SE 9701762
(71) Applicant: THERMOPANEL AB, S-250 22 Helsingborg (SE)
(72) Inventor: Palmquist, Gert, 250 21 Helsingborg (SE)
(74) Representative: Giver, Sören Bo

(57) **Abstract**

A method for coupling two components (4; 6; 9; 17) to form a comfort appliance (1), such as a hot-water radiator, said coupling comprising the step of establishing press fits between a tube (8; 14;) and a connecting means (5; 7; 9; 18) of each component (4; 6; 9; 17) to form a flow path between the components (4; 6; 9; 17), said method being characterised by the steps of arranging the tube (8, 14) between the connecting means (5; 7; 9; 18), pressing the connecting means (5; 7; 9; 18) against the end surfaces of the tube (8; 14), moving, in consequence of the pressing, the connecting means (5; 7; 9; 18) towards each other, dimensioning the tube (8; 14), such that during said pressing and moving, it engages the connecting means (5; 7; 9; 18) and forming the tube (8; 14), such that during said pressing and moving it withstands deformation in the axial direction and is deformed in the radial direction so as to form press fits which counteract a separation of the coupled components (4; 6; 9; 17).

## Description

### Field of the Invention

The present invention relates generally to a method for coupling two components to form a comfort appliance working with a fluid and intended for heating (such as a hot-water radiator) and/or cooling (below referred to as comfort appliance), and specifically a method which comprises the step of establishing a press fit between a tube and a connecting means of each component to form a flow path between the components.

### Background Art

A comfort appliance in the form of e.g. a hot-water radiator normally comprises a radiator body and a coupling for connecting the hot-water radiator to a system of hot-water mains. The radiator may comprise a plurality of radiator bodies if this is necessary with respect to the volume of the room which the radiator is intended to heat. In case the radiator comprises a plurality of radiator bodies, these are normally arranged in parallel with each other.

A method of coupling two components to form a hot-water radiator is disclosed in FR-A1-2,080,839, according to which method a body, which at one end has a thread and towards an opposite end has an increasing diameter, is inserted into an elastic tube. The threaded end will extend through the tube and project therefrom at one end of the tube. Subsequently, the package of tube and body is inserted in a duct of the first component in such a manner that the threaded end projects from the duct. The second component, which has a hole, is then applied to the first component in such a manner that the threaded end extends through said hole. The second component has an additional hole, through which a nut can then be inserted and be screwed onto the threaded end. The body will be pulled towards the second component, whereby the tube, owing to a wedge action caused by said increase in diameter, expands in the radial direction and thus forms a tight press fit.

The prior art described above thus allows mounting and dismounting of components in a comfort appliance. However, the mounting operation is time-consuming. If an additional component is to be connected to the comfort appliance, the entire procedure must besides be repeated. Finally it is necessary for one of the components to be designed so as to allow access for screwing.

### Summary of the Invention

The object of the present invention is to provide a method for tight and rapid coupling of two components to form a comfort appliance. It is also preferred that the method also allow rapid coupling of more than two components.

The object is achieved by a method having the distinctive features defined in claim 1. Advantageous embodiments of the method are stated in the subclaims 2-4.

According to the invention, a method thus is provided for coupling two components to form a comfort appliance, such as a hot-water radiator, said coupling comprising the step of establishing a press fit between a tube and a connecting means of each component to form a flow path between the components, said method being characterised by the steps of arranging the tube between the connecting means, pressing the connecting means against the end surfaces of the tube, moving, in consequence of the pressing, the connecting means towards each other, dimensioning the tube so as to engage the connecting means during said pressing and moving, and forming the tube so as to withstand, during said pressing and moving, deformation in the axial direction and be deformed in the radial direction so as to form press fits which counteract a separation of the coupled components.

The inventive method permits rapid coupling of two components to form a comfort appliance. The resulting press fits are also reliable and tight, which is ensured by the radial deformation of the tube. By reliable is here meant that the press fits will be so strong as to counteract separation of the coupled components.

It is certainly possible first to press the tube onto merely the connecting means of one component by applying a force directly to the one, free end surface of the tube and a counterforce to the component. Opposed pressing forces then act directly upon one free end surface of the tube and indirectly, by the intermediary of the component, on the other end surface of the tube. Subsequently the other component is placed at the free end of the tube, whereupon opposed press forces are applied to both components. In this step, the press forces act indirectly on both end surfaces of the tube. According to a preferred embodiment of the method, the connecting means are, however, pressed simultaneously against the end surfaces of the tube, which are then moved simultaneously towards each other. It is thus possible to couple the components in a single pressing operation. Preferably said pressing and moving are carried out by applying opposed forces to the components.

For application of said forces, a press tool can suitably be used, thereby making it possible to obtain great press forces and, thus, strong and tight press fits.

According to one more preferred embodiment of the method, the tube is straight, and said pressing and moving are carried out in the axial direction of the tube.

It should be noted that to accomplish the coupling, no means other than the tube and the connecting means are required.

The connection of the tube to the connecting means of the components merely by application of said pressing forces implies that the method allows extremely rapid and simple coupling of the components. Moreover, the radial deformability of the tube allows on the one hand that reliable, tight press fits can be obtained and, on the other hand, that the tube can be made with rough tolerances, which reduces its manufacturing cost. The tube can advantageously be made of a polymer material, such as PEX plastic, to obtain its radial deformability.

The present invention also allows rapid coupling of a plurality of components. In this case, the components are arranged with their connecting means facing each other in pairs, whereupon tubes are mounted between each pair of connecting means. The coupling is carried out by applying opposed forces to the outermost components. The forces will act on the end surfaces of the tubes and move the connecting means in pairs towards each other, during which movement the engagement of the tubes with the respective connecting means provides said press fit by radial deformation.

Preferred embodiments of the invention will now be described with reference to the accompanying drawings.

### Brief Description of the Drawings

Fig. 1 is a top plan view of a hot-water radiator in a non-coupled state, said radiator comprising two embodiments of an arrangement according to the present invention.

Fig. 2 is a top plan view of the radiator shown in Fig. 1 in its coupled state.

Fig. 3 is a top plan view of a hot-water radiator in a non-coupled state, said radiator comprising two arrangements of a third embodiment of the invention.

Fig. 4 is a top plan view of the radiator shown in Fig. 3 in its coupled state.

Fig. 5 is a top plan view of a hot-water radiator in a non-coupled state, said radiator comprising three arrangements according to the invention, of which two are of the type shown in Fig. 3 and one is of a fourth embodiment.

Fig. 6 is a top plan view of the radiator shown in Fig. 5 in its coupled state.

### Description of Embodiments

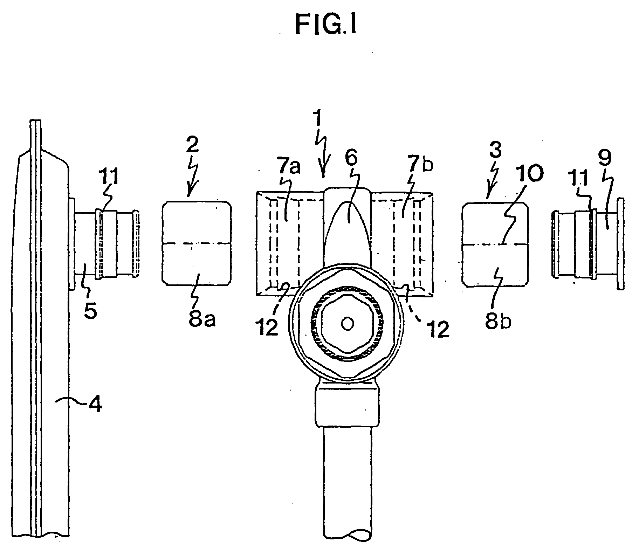

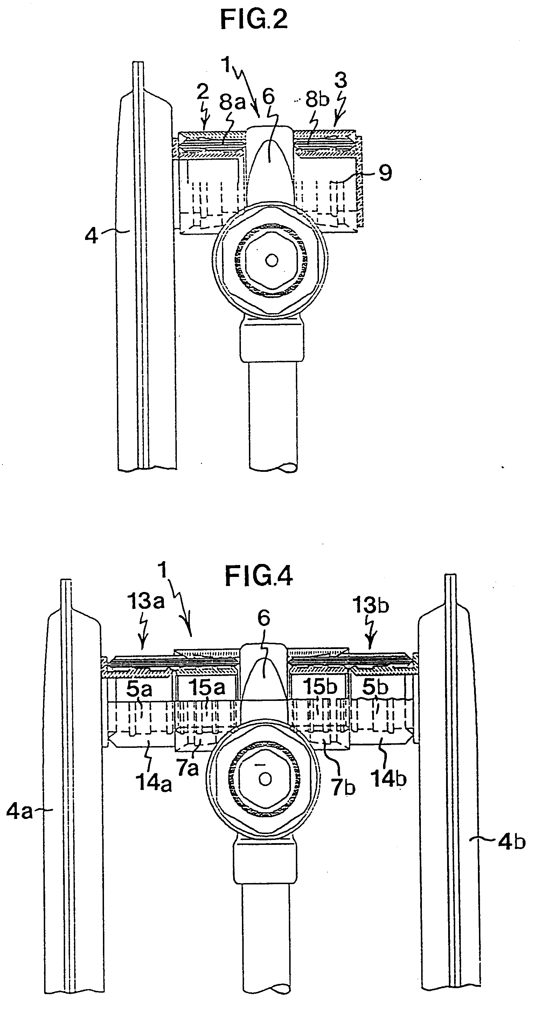

Figs 1 and 2, to which reference is made, show a non-coupled (Fig. 1) and a coupled (Fig. 2) state of a hot-water radiator 1, which comprises two embodiments 2, 3 of the inventive arrangement. The radiator 1 comprises a panel body in the form of a radiator body 4 with a male connecting means 5, which is extended perpendicular to the principal plane of the radiator body 4, a connecting means in the form of a coupling 6 for connection of the hot-water radiator 1 to a system of hot-water mains, said coupling 6 having a first and a second female connecting means 7a and 7b facing away from each other, a first tube 8a, a second tube 8b and a closed nipple 9 constituting a male connecting means 9. The male connecting means 5 of the radiator body 4, the first tube 8a and the first female connecting means 7a of the coupling 6 form the first embodiment 2 of the arrangement, while the second female connecting means 7b of the coupling 6, the second tube 8b and the closed nipple 9 form the second embodiment 3 of the arrangement according to the invention. The tubes 8a and 8b are made of a material which is elastically deformable in the radial direction, for instance, a polymer material such as PEX plastic.

The connecting means 5, 7a, 7b, 9 and the tubes 8a and 8b are circular in cross-section, the male connecting means 5 and 9 having a somewhat larger outer diameter than the inner diameter of the tubes 8a and 8b, and the female connecting means 7a and 7b having a slightly smaller inner diameter than the outer diameter of the tubes 8a and 8b. Moreover, the tubes 8a and 8b and the male connecting means 5 and 9 have been given essentially the same axial extent and the female connecting means 7a and 7b the corresponding axial depth.

In the coupled stated of the radiator 1 (Fig. 2) each tube 8a and 8b forms press fits with and a flow path between two connecting means 5, 7a and 9, 7b, respectively, of the male and female type. Said press fits are established by first arranging the tubes 8a and 8b between the connecting means 5, 7a and 7b, 9, respectively, along a common longitudinal axis 10, whereupon opposed axial press forces are applied to the radiator body 4 and the nipple 9, which forces are directed along the common longitudinal axis and indirectly act upon the end surfaces of the tubes 8a and 8b. These forces are suitably produced by means of a press tool (not shown), which in operation is adapted to produce great press forces. These forces are able to connect the tubes 8a and 8b to the connecting means 5, 7a, 7b, 9, said difference in diameter between the tubes 8a and 8b and the connecting means 5, 7a, 7b, 9 implying that each tube 8a and 8b is deformed along the parts thereof which engage an associated connecting means 5, 7a, 7b, 9 so as to form press fits. As mentioned above, the tubes 8a and 8b are elastically deformable in the radial direction, which results in radial forces acting in each press fit to counteract said deformation, thereby obtaining tight press fits. The male connecting means 5 and 9 are entirely accommodated in the female connecting means 7a and 7b, which results in a compact hot-water radiator 1, where the coupling 6 can be arranged close to the radiator body 4. Besides the male connecting means 5 and 9 serve as abutment, which restricts the radial deformation in the press fits. As a result, greater radial forces arise in the press fits, which yields stronger and more reliably tight press fits.

The male connecting means 5 and 9 are provided with ribs 11 acting as barbs and the female connecting means 7a and 7b are provided with grooves 12 acting as barbs, thereby further improving the strength of the press fits.

The purpose of the closed nipple 9 is to block the second female connecting means 7b of the coupling 6 so as to facilitate the use of a universal coupling 6 with two female connecting means 7a and 7b, of which only one 7a is used in the embodiment in Figs 1 and 2 and of which both are used for coupling two radiator bodies.

The arrangement in Figs 1 and 2 can quickly be completed and results in tight press fits on the one hand between the coupling 6 and the radiator body 4 and, on the other hand, between the coupling 6 and the nipple 9. Apart from said tubes, the arrangement does not require any means for carrying out the coupling. If the tubes and the connecting means are circular in cross-section and if the materials of the tubes and the connecting means, respectively, are chosen such that the friction therebetween in the press fits is low despite the great press forces, one component can be rotated relative to the other with maintained tightness of the press fits, which may be advantageous, for example, when aligning a connecting means with a connecting means of a system of mains.

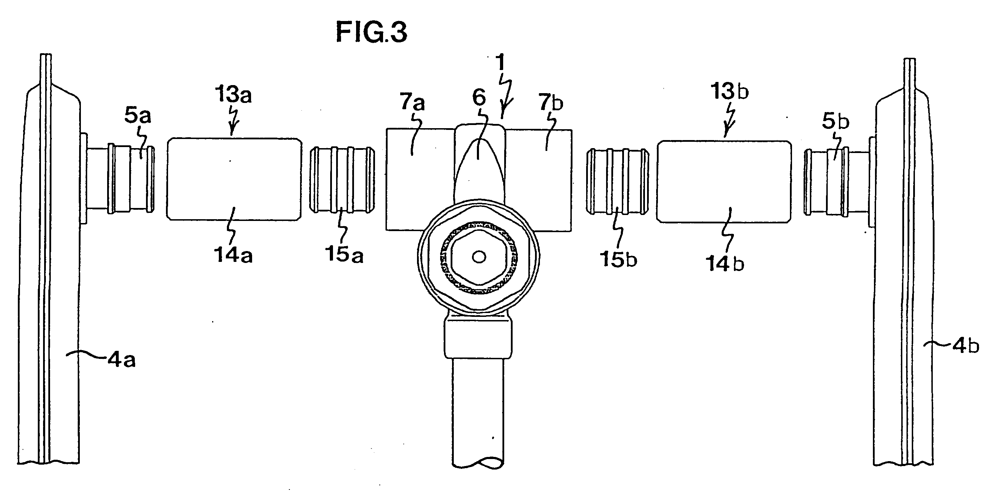

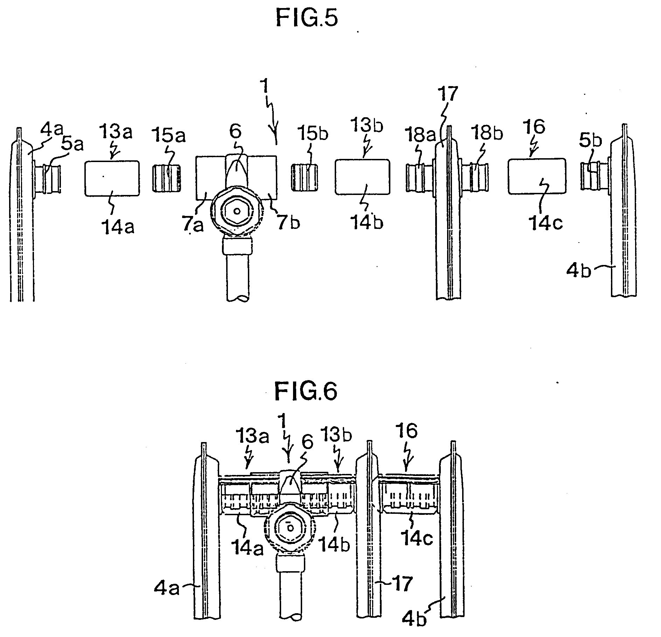

Figs 3 and 4, to which reference is now made, illustrate a radiator 1 in a non-coupled (Fig. 3) and a coupled (Fig. 4) state, said radiator 1 having two arrangements 13a and 13b of a further embodiment of the present invention. The radiator 1 comprises two radiator bodies 4a and 4b, a coupling 6, a first tube 14a, a second tube 14b as well as a first and a second nipple 15a and 15b with a through fluid duct. The components of the radiator 1 in Figs 3 and 4 are identical with the corresponding components of the radiator in Figs 1 and 2, except that the length of the tubes 14a and 14b has been doubled and the nipples 15a and 15b are formed with axial flow ducts extending therethrough.

In the coupled state in Fig. 4, the male connecting means 5a and 5b of each radiator body 4a, 4b forms, together with one tube 14a, 14b each and one female connecting means 7a, 7b each of the coupling 6, two arrangements 13a, 13b according to the invention.

Before pressing together the components 4a, 4b and 6, the nipples 15a and 15b are inserted in the tube ends facing the coupling 6. Subsequently, the tubes 14a, 14b are mounted between the connecting means 5a, 7a and 5b, 7b, respectively, whereupon opposed pressing forces are applied to the outsides of the radiator bodies 4a, 4b according to the same principle as in the preceding embodiment. During this pressing together, the nipples 15a and 15b serve to restrict the radial deformation of the tubes 14a, 14b, thereby establishing strong press fits.

In the embodiment in Figs 3 and 4, the tubes 14a and 14b preferably have such a rigidity as to form a supporting structure of the radiator 1, such that parts thereof are supported by the tubes 14a and 14b. In particular, one radiator body 4a can be fixedly mounted in a wall while the other radiator body 4b and the coupling 6 are supported by the tubes. In the embodiment of Figs 1 and 2, this supporting function of the tube is not necessary since the male connecting means 5 of the radiator body 4 extends into the female connecting means 7a of the coupling 6. A tube made of a PEX type plastic material can be designed so as to have, in addition to the above-mentioned elastic deformability in the radial direction, a rigidity resulting in such a supporting structure, and therefore the tubes 14a and 14b are advantageously made of such a material.

By the intermediary of the embodiment of the inventive arrangement as shown in Figs 3 and 4, two radiator bodies can thus be coupled to a common universal coupling. By using two radiator bodies, it is possible to enlarge the heat-transferring surface of the hot-water radiator and, thus, heat a larger room volume.

Figs 5 and 6 show in a non-coupled (Fig. 5) and a coupled (Fig. 6) state a radiator 1 which comprises three arrangements 13a, 13b, 16 according to the present invention. Two of the arrangements 13a and 13b are of the same embodiment as in Figs 2 and 3, while the third arrangement 16 constitutes a fourth embodiment of the invention. The radiator 1 comprises two outer radiator bodies 4a and 4b, a coupling 6, two nipples 15a and 15b and two tubes 14a and 14b as illustrated in Figs 3 and 4. In addition, the radiator comprises a third tube 14c of the same type as the tubes 14a and 14b, and a central radiator body 17 provided with two male connecting means 18a and 18b, which are extended perpendicular to the principal plane of the radiator body 17 and face away from each other on one side each of the radiator body 17.

The male connecting means 5a of the radiator body 4a, one tube 14a and one female connecting means 7a of the coupling 6 form a first arrangement 13a, and the other female connecting means 7b of the coupling 6, the other tube 14b and one male connecting means 18a of the radiator body 17 form a second arrangement 13. These two arrangements 13a and 13b are of the same type as those shown in Figs 3 and 4. The other male connecting means 18b of the radiator body 17, the third tube 14c and the male connecting means 5b of the radiator body 4b form a third arrangement 16, which constitutes said fourth embodiment of the invention.

The components of the hot-water radiator are coupled according to the method described above.

In the coupled state (Fig. 6) of the radiator 1, two radiator bodies 4a and 17 are coupled to the coupling 6 in the same manner as in the embodiment according to Figs 3 and 4. The remaining radiator body 4b is coupled to the radiator body 17. Two male connecting means 18b, 5b of the latter radiator bodies 17, 4b extend into one half each of the tube 16c arranged therebetween.

According to an embodiment (not shown) of the invention, a component has a barbed male connecting means, a collar being concentrically arranged on the outside thereof to form an annular groove between the male connecting means and the collar. When connecting a tube to said male connecting means, the latter is inserted into one end of the tube, whereby the tube end is guided into said annular groove. As a result, an extremely strong connection is established since the tube end guided into the groove by the collar is pressed against the barbs of the male connecting means. This results in a fit which prevents the tube and the component from being separated.

The components which are coupled need not necessarily be those stated above, and the number of components that are coupled together may also vary.

Furthermore it is not necessary for the radiator body to have male connecting means or for the coupling to have female connecting means, but the connecting means can be designed in some suitable fashion.

It is also conceivable first to connect a tube to a connecting means of one component and then connect the tube to a connecting means of another component.

Although it is advantageous to apply forces acting indirectly on the end surfaces of the tube, as described above, it is also conceivable that one of the forces is applied directly to an end surface of the tube.

Even if embodiments of a comfort appliance for heating only have been described above, it will be appreciated that also comfort appliances for cooling are comprised by the invention. This also applies to comfort appliances that are designed for cooling as well as heating. Moreover, the embodiments shown above can also be used for cooling or for heating and cooling.

The appended claims are intended to cover all changes and modifications that fall within the scope of the invention.

## Claims

1. A method for coupling two components (4; 6; 9; 17) to form a comfort appliance (1), such as a hot-water radiator, said coupling comprising the step of establishing a press fit between a tube (8; 14;) and a connecting means (5; 7; 9; 18) of each component (4; 6; 9; 17) to form a flow path between the components (4; 6; 9; 17),
**characterised** by the steps of
arranging the tube (8; 14) between the connecting means (5; 7; 9; 18),
pressing the connecting means (5; 7; 9; 18) against the end surfaces of the tube (8; 14),
in consequence of the pressing, moving the connecting means (5; 7; 9; 18) towards each other,
dimensioning the tube (8; 14) so as to engage the connecting means (5; 7; 9; 18) during said pressing and moving, and
forming the tube (8; 14) so as to withstand, during said pressing and moving, deformation in the axial direction and be deformed in the radial direction so as to form press fits which counteract a separation of the coupled components (4; 6; 9; 17).

2. A method as claimed in claim 1, **characterised** in that the connecting means (5; 7; 9; 18) are simultaneously pressed against the end surfaces of the tube (8; 14) and subsequently are moved simultaneously towards each other.

3. A method as claimed in claim 1 or 2, **characterised** in that said pressing and moving are effected by applying opposed forces to the components (4; 6; 9; 17).

4. A method as claimed in any one of the preceding claims, **characterised** in that the tube (8; 14) is straight, and that said pressing and moving are effected in the axial direction of the tube.
